# EUROPÄISCHE PATENTSCHRIFT

(11) **EP 1 213 968 B1**
(45) Veröffentlichungstag und Bekanntmachung des Hinweises auf die Patenterteilung: **14.07.2004**
(21) Anmeldenummer: 00951516.4
(22) Anmeldetag: 16.08.2000
(51) Int. Cl.: A21B 5/02

(54) **WAFFELBACKOFEN MIT UMLAUFENDER BACKZANGENKETTE**
OVEN DEVICE FOR BAKING WAFFLES, WITH A ROTATING WAFFLE IRONS CHAIN
FOUR A GAUFRES DOTE D'UNE CHAINE TOURNANTE DE PINCES A GAUFRES

(30) Priorität: 08.09.1999 DE 19942806
(43) Veröffentlichungstag der Anmeldung: 19.06.2002
(73) Patentinhaber: Hebenstreit GmbH, 64527 Mörfelden-Walldorf (DE)
(72) Erfinder: BOTT, Ulrich, D-64347 Griesheim (DE)
(74) Vertreter: Katscher, Helmut, Dipl.-Ing.
(86) Internationale Anmeldenummer: PCT/EP2000/007968
(87) Internationale Veröffentlichungsnummer: WO 2001/017359

(56) Entgegenhaltungen:
- WO-A-95/24128
- WO-A-97/41733

## Beschreibung

Die Erfindung betrifft einen Waffelbackofen mit einer umlaufenden endlosen Backzangenkette mit mehreren aufklappbaren Backzangen, die jeweils ein Zangenunterteil und ein daran an einem Zangenscharnier angelenktes Zangenoberteil aufweisen, wobei eine untere Formplatte am Zangenunterteil angeordnet ist und zusammen mit einer oberen Formplatte mehrere Backformhohlräume umschließt.

Derartige Waffelbacköfen sind bekannt (DE 36 43 191 C1). Bei geöffneter Backzange wird in die Backformhohlräume der unteren Formplattenteig eingebracht. In einer anschließend von der Backzange durchlaufenen Schließstation wird die Backzange geschlossen und der in den nunmehr geschlossenen Backformhohlräumen enthaltene Teig wird ausgebacken. Beim Durchlaufen einer anschließenden Öffnungsstation wird das Backerzeugnis, beispielsweise eine Waffel, aus der ausgeklappten Backzange entnommen.

Dieser Herstellungsablauf ist für die Verarbeitung von Waffelteig und ähnlichem Teig üblich und geeignet. Die so hergestellten Waffeln oder anderen Backerzeugnisse sind typischerweise verhältnismäßig dünn und spröde. Ein beim Backvorgang anfallender Teigüberschuß bildet im Bereich der Trennfuge zwischen den beiden Formplatten einen dünnen Grat, der entweder schon beim Entnehmen der Waffel aus der Formplatte abbricht oder bei der weiteren Verarbeitung in einfacher Weise entfernt werden kann und deshalb am fertigen Backerzeugnis nicht stört.

Für die Verarbeitung von Biskuitteig ist dieser Herstellungsvorgang jedoch nicht geeignet. Im Vergleich zu dünnen und spröden Waffeln sind Biskuiterzeugnisse verhältnismäßig dick und weich. Ein durch einen Teigüberschuß erzeugter Grat oder sonstiger Ansatz bricht daher nicht ab und würde am fertigen Backerzeugnis stören.

Aufgabe der Erfindung ist es daher, einen Waffelbackofen der eingangs genannten Gattung so auszubilden, daß damit die Herstellung von Biskuiterzeugnissen ohne störende Grate oder andere Ansätze ermöglicht wird.

Diese Aufgabe wird erfindungsgemäß dadurch gelöst, daß die obere Formplatte unabhängig vom Zangenoberteil am Zangenscharnier schwenkbar gelagert ist, daß jeder Backformhohlraum mindestens eine sich zur Oberseite der oberen Formplatte erstreckende Steigerbohrung aufweist und daß eine am Zangenoberteil angebrachte Zapfenträgerplatte mehrere, jeweils in die zugeordnete Steigerbohrung passende Verschlußzapfen aufweist.

Durch die unabhängige Schwenkbarkeit der oberen Formplatte und einer am Zangenoberteil angebrachten Zapfenträgerplatte wird es ermöglicht, nach dem Eindringen des Teigs in die Backformhohlräume der unteren Formplatte zunächst nur die obere Formplatte aufzulegen, wobei deren Steigerbohrungen noch offen bleiben. Unter der Wirkung der in den beiden Formplatten enthaltenen Wärme beginnt der Backvorgang, wobei sich der in jeden Backformhohlraum eingebrachte Teig ausdehnt und schließlich auch in die Steigerbohrung eintritt. Da hierbei die Luft bzw. der Wasserdampf aus dem oberen Bereich des Backformhohlraums durch die Steigerbohrung entweichen kann, ist sichergestellt, daß der Backformhohlraum vollständig gefüllt ist.

Wenn anschließend das Zangenoberteil mit der daran angebrachten Zapfenträgerplatte auf die obere Formplatte geschwenkt wird, dringen die Verschlußzapfen in die Steigerbohrungen der oberen Formplatte ein und verdrängen den darin enthaltenen Teig in den Backformhohlraum zurück. In diesem geschlossenen Zustand der Backzange wird der Backvorgang abgeschlossen. Hierbei erfolgt die Beheizung jeweils mittels Gasbrennern. Ein Verstopfen der Steigerbohrungen ist ausgeschlossen, weil der darin enthaltene Teig durch die Verschlußzapfen der Zapfenträgerplatte aus den Steigerbohrungen verdrängt wurde.

Im Zusammenhang mit den Backzangen und den Formplatten werden die Begriffe "oben" und "unten" so benutzt, wie diese Teile in der Füll- und Schließstation angeordnet sind, d.h. üblicherweise im Obertrum der Backzangenkette. Es versteht sich, daß im Untertrum der Backzangenkette die obere Formplatte unten und die untere Formplatte oben angeordnet ist.

Die hergestellten Backerzeugnisse, insbesondere Biskuiterzeugnisse, werden weder eine durch eine Dampfblase im Oberteil des Backformhohlraums erzeugte Vertiefung noch einen durch überschüssigen Teig erzeugten Grat oder Ansatz auf und können daher ohne Nachbearbeitung, die bei weichen Biskuiterzeugnissen ohnehin schwierig oder unmöglich wäre, weiterverarbeitet werden, beispielsweise mit einer Schokoladenumhüllung o.dgl. versehen werden.

Weitere vorteilhafte Ausgestaltungen des Erfindungsgedankens sind Gegenstand von Unteransprüchen.

Nachfolgend wird ein Ausführungsbeispiel der Erfindung näher erläutert, das in der Zeichnung dargestellt ist. Es zeigt:
Fig. 1 eine geöffnete Backzange in einem Schnitt senkrecht zur Laufrichtung der Backzangenkette,
Fig. 2 die Backzange nach Fig. 1 nach dem Zuklappen der oberen Formplatte,
Fig. 3 die Backzange nach den Fig. 1 und 2 im vollständig geschlossenen Zustand,
Fig. 4 eine Ansicht in Richtung des Pfeiles IV in Fig. 3 an der Schließstation des Waffelbackofens und
Fig. 5a)-d) in vereinfachter Darstellungsweise Teilschnitte durch die untere Formplatte, die obere Formplatte und die Zapfenträgerplatte der in den Fig. 1-4 dargestellten Backzange in aufeinanderfolgenden Zuständen.

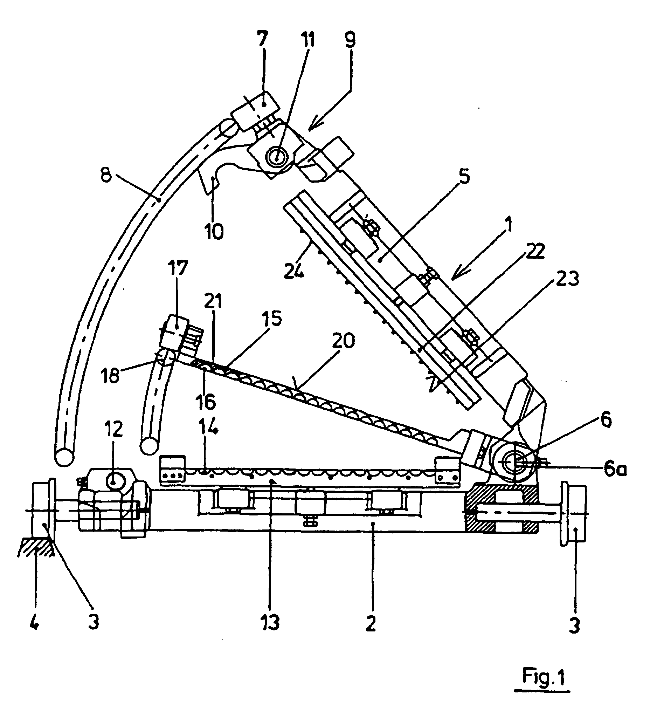

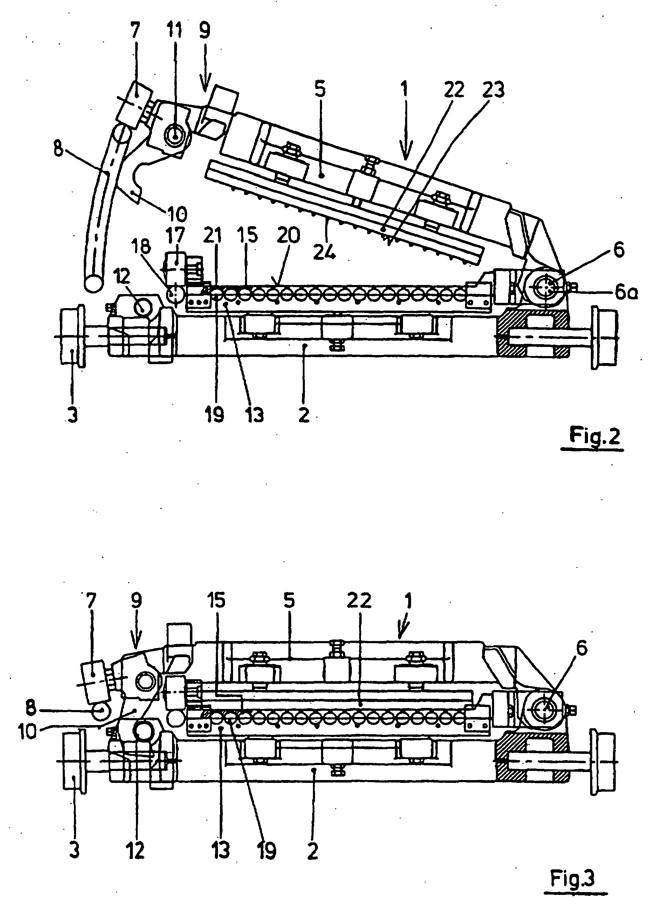

Ein Waffelbackofen zum Herstellen von Biskuiterzeugnissen, der in den Fig. 1-4 nur in Teilbereichen dargestellt ist, weist eine endlos umlaufende Backzangenkette auf, die aus mehreren aufklappbaren Backzangen 1 besteht. Jede Backzange 1 weist ein Zangenunterteil 2 auf, das mittels seitlicher Führungsrollen 3 an Führungsschienen 4 des Waffelbackofens geführt ist. Ein Zangenoberteil 5 ist am Zangenunterteil 2 in einem seitlichen Zangenscharnier 6 schwenkbar und aufklappbar gelagert. Die Schwenkbewegung des Zangenoberteils 5 erfolgt über eine Laufrolle 7, die an einer Schiene 8 geführt ist. Eine auf der dem Zangenscharnier 6 gegenüberliegenden Seite angeordnete Verschlußeinrichtung 9 weist einen um ein Gelenk 11 schwenkbaren Verschlußhaken 10 auf, der - gesteuert durch die Laufrolle 7 - im geschlossenen Zustand der Backzange 1 (Fig. 3) hinter einen Haltebolzen 12 am Zangenunterteil 2 greift.

Das Zangenunterteil 2 trägt eine untere Formplatte 13, in der mehrere Formnester 14 ausgespart sind. Eine obere Formplatte 15, die ebenfalls mehrere Formnester 16 aufweist, ist schwenkbar auf der Scharnierachse 6a des Zangenscharniers 6 gelagert. Auf der gegenüberliegenden Seite ist die obere Formplatte 15 mit einer Laufrolle 17 versehen, die mit einer Führungsschiene 18 in Eingriff steht.

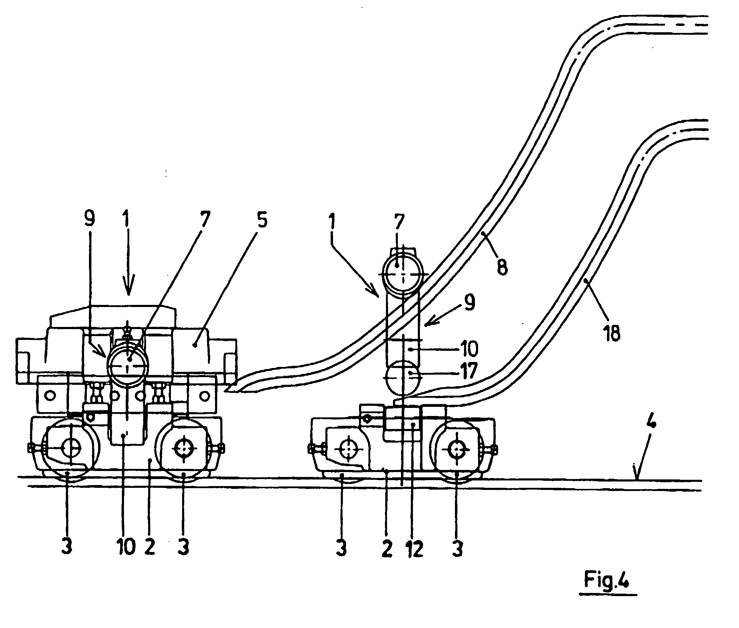

Das Zangenoberteil 5 und die obere Formplatte 15 sind somit um die gemeinsame Scharnierachse 6a am Zangenunterteil 2 unabhängig voneinander schwenkbar gelagert. Der Schwenkantrieb erfolgt jeweils dadurch, daß die Laufrolle 7 mit der Führungsschiene 8 bzw. unabhängig davon die Laufrolle 17 mit der Führungsschiene 18 in Eingriff tritt. Wie man aus Fig. 4 erkennt, sind die Führungsschienen 8 und 18 auch in Laufrichtung der Backzangenkette so gegeneinander versetzt, daß die Schwenkbewegungen der oberen Formplatte 15 und des Zangenoberteils 5 nacheinander erfolgen.

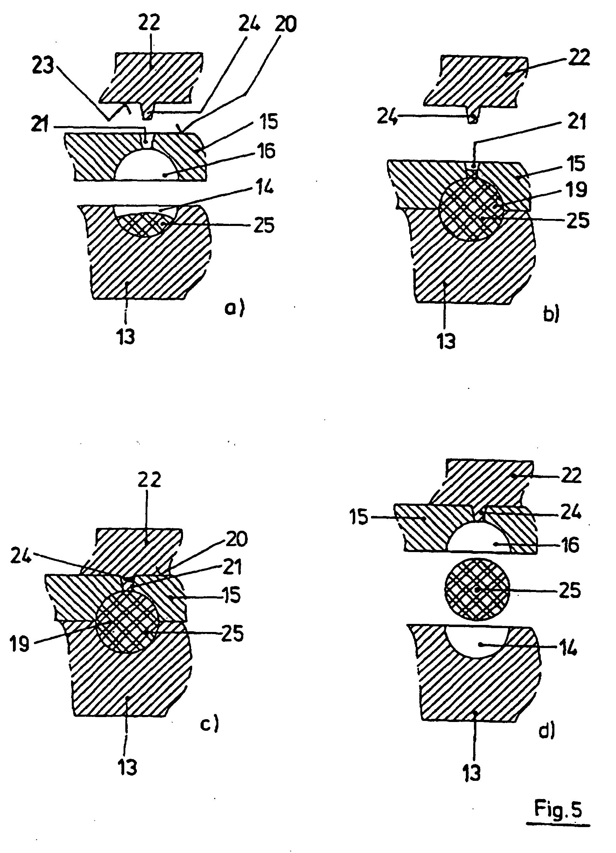

Im geschlossenen Zustand der beiden Formplatten 13 und 15 bilden deren Formnester 14 und 16 jeweils einen geschlossenen Backformhohlraum 19 (Fig. 5b). Jedes Formnest 16 der oberen Formplatte 15 und somit jeder Backformhohlraum 19 weist eine sich zur Oberseite 20 der oberen Formplatte 15 erstreckende Steigerbohrung 21 auf, die jeweils an der höchsten Stelle des Backformhohlraums 19 angeordnet ist.

Am Zangenoberteil 5 ist eine Zapfenträgerplatte 22 angebracht, vorzugsweise justierbar angeschraubt, die in ihrer der oberen Formplatte 15 zugekehrten Unterseite 23 mehrere Verschlußzapfen 24 aufweist, die jeweils einer Steigerbohrung 21 zugeordnet sind und in diese passen. Wie in den Fig. 3 und 5c) gezeigt, liegt die Zapfenträgerplatte 22 im geschlossenen Zustand der Backzange 1 flächig an der Oberseite 20 der oberen Formplatte 15 an. Jeder Verschlußzapfen 24 füllt im geschlossenen Zustand der Backzange 1 die zugeordnete Steigerbohrung 21 im wesentlichen aus.

Im geöffneten Zustand der Backzange (Fig. 1 und 5a) wird durch eine (nicht dargestellte) Fülleinrichtung in jedes Formnest 14 der unteren Formplatte 13 die jeweils erforderliche Teigmenge 25 dosiert eingebracht. Mittels der an den gesonderten Führungsschienen 8 und 18 geführten Laufrollen 7 bzw. 17 werden sodann die obere Formplatte 15 und das die Zapfenträgerplatte 22 tragende Zangenoberteil 5 in einer Schließstation des Waffelbackofens in der Weise geführt, daß zunächst die obere Formplatte 15 auf die untere Formplatte 13 geklappt wird, um die Backformhohlräume 19 zu schließen (Fig. 2 und Fig. 5b). Der im Backformhohlraum 19 enthaltene Teig 25 dehnt sich aus, füllt den Backformhohlraum 19 und dringt schließlich in die Steigerbohrung 21 ein, wie in Fig. 5b) gezeigt ist.

Nachfolgend wird das Zangenoberteil 5 mit der Zapfenträgerplatte 22 auf die obere Formplatte 15 geklappt (Fig. 3), wobei die Verschlußzapfen 24 in die Steigerbohrungen 21 eingeführt werden (Fig. 5c) und den darin enthaltenen Teig verdrängen. Nach Beendigung des Backvorgangs wird die Backzange 5 vollständig aufgeklappt und das Backerzeugnis 25 wird aus dem Backformhohlraum 19 entnommen (Fig. 5d).

## Patentansprüche

1. Waffelbackofen mit einer umlaufenden endlosen Backzangenkette mit mehreren aufklappbaren Backzangen (1), die jeweils ein Zangenunterteil (2) und ein daran an einem Zangenscharnier (6) angelenktes Zangenoberteil (5) aufweisen, wobei eine untere Formplatte (13) am Zangenunterteil (2) angeordnet ist und zusammen mit einer oberen Formplatte (15) mehrere Backformhohlräume (19) umschließt, **dadurch gekennzeichnet, daß** die obere Formplatte (15) unabhängig vom Zangenoberteil (5) am Zangenscharnier (6) schwenkbar gelagert ist, daß jeder Backformhohlraum (19) mindestens eine sich zur Oberseite (20) der oberen Formplatte (15) erstreckende Steigerbohrung (21) aufweist und daß eine am Zangenoberteil (5) angebrachte Zapfenträgerplatte (22) mehrere, jeweils in die zugeordnete Steigerbohrung (21) passende Verschlußzapfen (24) aufweist.

2. Waffelbackofen nach Anspruch 1, **dadurch gekennzeichnet, daß** jeder Verschlußzapfen (24) im geschlossenen Zustand der Backzange (1) die zugeordnete Steigerbohrung (21) im wesentlichen ausfüllt.

3. Waffelbackofen nach Anspruch 1, **dadurch gekennzeichnet, daß** die obere Formplatte (15) und das Zangenoberteil (5) mittels jeweils einer Laufrolle (17 bzw. 7) an gesonderten Führungsschienen (18 bzw. 8) in einer Schließstation des Waffelbackofens in der Weise geführt sind, daß zunächst die obere Formplatte (15) auf die untere Formplatte (13) klappbar ist, um die Backformhohlräume (19) zu schließen, und daß nachfolgend das Zangenoberteil (5) mit der Zapfenträgerplatte (22) auf die obere Formplatte (15) klappbar ist, um die Verschlußzapfen (24) in die Steigerbohrungen (21) einzuführen.

4. Waffelbackofen nach Anspruch 1, **dadurch gekennzeichnet, daß** das Zangenoberteil (5) und die obere Formplatte (15) um eine gemeinsame Scharnierachse (6a) schwenkbar sind.

5. Waffelbackofen nach Anspruch 1, **dadurch gekennzeichnet, daß** die Zapfenträgerplatte (22) im geschlossenen Zustand der Backzange (1) flächig an der Oberseite (20) der oberen Formplatte (15) anliegt.

## Claims

1. Waffle-baking oven having an endless, circulating waffle-irons chain with a plurality of swing-open waffle irons (1) which each have a bottom irons part (2) and a top irons part (5) articulated thereon by way of an irons hinge (6), a bottom moulding plate (13) being arranged on the bottom irons part (2) and, together with a top moulding plate (15), enclosing a plurality of baking mould cavities (19), **characterized in that** the top moulding plate (15) is mounted such that it can be pivoted on the irons hinge (6) independently of the top irons part (5), **in that** each baking mould cavity (19) has at least one riser bore (21) extending to the top side (20) of the top moulding plate (15), and **in that** a stub-carrier plate (22) fitted on the top irons part (5) has a plurality of closure stubs (24) which each fit into the associated riser bore (21).

2. Waffle-baking oven according to Claim 1, **characterized in that** each closure stub (24) essentially fills the associated riser bore (21) in the closed state of the waffle irons (1).

3. Waffle-baking oven according to Claim 1, **characterized in that** the top moulding plate (15) and the top irons part (5) are guided, by means of in each case one running roller (17 or 7, respectively), on separate guide rails (18 and 8, respectively) in a closing station of the waffle-baking oven such that, in the first instance, the top moulding plate (15) can be swung onto the bottom moulding plate (13) in order to close the baking mould cavities (19), and **in that**, subsequently, the top irons part (5) can be swung, with the stub-carrier plate (22), onto the top moulding plate (15) in order to introduce the closure stubs (24) into the riser bores (21).

4. Waffle-baking oven according to Claim 1, **characterized in that** the top irons part (5) and the top moulding plate (15) can be pivoted about a common hinge pin (6a).

5. Waffle-baking oven according to Claim 1, **characterized in that** the stub-carrier plate (22) butts flatly against the top side (20) of the top moulding plate (15) in the closed state of the waffle irons (1).

## Revendications

1. Four à gaufres comprenant une chaîne sans fin de pinces à gaufres en rotation avec plusieurs pinces à gaufres (1) rabattables, qui présentent à chaque fois une partie inférieure de pince (2) et une partie supérieure de pince (5) articulée à celle-ci par une charnière de pince (6), une plaque de moule inférieure (13) étant disposée sur la partie inférieure de pince (2) et entourant conjointement avec une plaque de moule supérieure (15) plusieurs espaces creux de moule de cuisson (19), **caractérisé en ce que** la plaque de moule supérieure (15) est montée de manière à pouvoir pivoter indépendamment de la partie supérieure de pince (5) sur la charnière de pince (6), **en ce que** chaque espace creux de moule de cuisson (19) présente au moins un alésage croissant (21) s'étendant vers le côté supérieur (20) de la plaque de moule supérieure (15) et **en ce qu'**une plaque de support de tourillons (22) montée sur la partie supérieure de pince (5) présente plusieurs tourillons de fermeture (24) s'adaptant à chaque fois dans l'alésage croissant associé (21).

2. Four à gaufres selon la revendication 1, **caractérisé en ce que** chaque tourillon de fermeture (24) remplit essentiellement dans l'état fermé de la pince à gaufre (1) l'alésage croissant associé (21).

3. Four à gaufres selon la revendication 1, **caractérisé en ce que** la plaque de moule supérieure (15) et la partie supérieure de pince (5) sont guidées à chaque fois au moyen d'un galet de roulement (17, respectivement 7) sur des rails de guidage spéciaux (18, respectivement 8) dans un poste de fermeture du four à gaufres de telle manière que la plaque de moule supérieure (15) puisse d'abord être rabattue sur la plaque de moule inférieure (13) afin de fermer les espaces creux de moule de cuisson (19), et **en ce qu'**ensuite la partie supérieure de pince (5) avec la plaque de support de tourillons (22) peut être rabattue sur la plaque de moule supérieure (15) afin d'introduire les tourillons de fermeture (24) dans les alésages croissants (21).

4. Four à gaufres selon la revendication 1, **caractérisé en ce que** la partie supérieure de pince (5) et la plaque de moule supérieure (15) peuvent pivoter autour d'un axe de charnière commun (6a).

5. Four à gaufres selon la revendication 1, **caractérisé en ce que** la plaque de support de tourillons (22) s'applique dans l'état fermé de la pince à gaufres (1) à plat contre le côté supérieur (20) de la plaque de moule supérieure (15).
